(19) Europäisches Patentamt
European Patent Office
Office européen des brevets

(11) **EP 3 007 368 A1**

(12) **EUROPEAN PATENT APPLICATION**

(43) Date of publication:
**13.04.2016 Bulletin 2016/15**

(51) Int Cl.:
***H04B 7/155*** (2006.01)

(21) Application number: **14187934.6**

(22) Date of filing: **07.10.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Nokia Solutions and Networks Oy 02610 Espoo (FI)**

(72) Inventors:
• **Laiyemo, Ayotunde Oluwaseun 90014 UNIVERSITY OF OULU (FI)**
• **Scott, Simon 90014 UNIVERSITY OF OULU (FI)**

(74) Representative: **Borgström, Markus et al Nokia Solutions and Networks GmbH & Co. KG T&I IPR Patent Administration St.-Martin-Straße 76 80240 München (DE)**

(54) **Controlling transmission**

(57)    Solutions for controlling transmission are provided. Information related to the channel state of a connection between a moving transceiver and a base station transceiver is received (202) and stored (206). The location of the transceiver is determined (204). If there is previously received information related to the channel state from the same location transmission of the base station transceiver to the moving transceiver is controlled (214) by utilizing the previously received information related to the channel state.

FIG. 2

**EP 3 007 368 A1**

## Description

### Technical Field

The invention relates to communications.

### Background

With the ever increasing demand for increasing data rates and higher quality services in the world of mobile communications comes ever increasing demand for better performance of cellular network infrastructures. People use their mobile equipment with support for high data rate services while they are at work, at home, and/or while traveling on a mass transportation vehicle, e.g. bus, train, and ship. Such a mass transportation vehicle may travel at a speed of up to 100 m/s, and a huge number of communicating mobile devices in the vehicle traveling at the same speed sets high demands for network operators, because the users wish to preserve their high data rate connections regardless of the speed of the vehicle.

Long-term evolution (LTE) of the 3rd generation mobile communication system standardized within 3GPP (3rd Generation Partnership Project) has introduced a relayed extension to cellular network infrastructure. Relaying links between user terminals and conventional base stations through mobile relays or relaying base stations improves capacity, coverage, and data rates. The mobile relays may be installed in buses, trains, cruisers and other mass transportation vehicles.

One problem associated with supporting mobile relay systems is the need of providing and ensuring sufficiently high data rates for the mobile wireless backhaul connections, also referred to as relay links, between a mobile relay system and donor cellular systems which are changing in time due to the mobility of the mobile relay system. In high speed transportation vehicles, impairments to the channel state information (CSI) due to delay in feedback over backhaul link is one cause of problems.

### Summary

The following presents a simplified summary of the invention in or-der to provide a basic understanding of some aspects of the invention. This summary is not an extensive overview of the invention. It is not intended to identify key/critical elements of the invention or to delineate the scope of the invention. Its sole purpose is to present some concepts of the invention in a simplified form as a prelude to a more detailed description that is presented later.

According to an aspect of the present invention, there is provided an apparatus, comprising: at least one processor; and at least one memory including computer program code, the at least one memory and the computer program code configured to, with the at least one processor, cause the apparatus at least to perform: receive information related to the channel state of a connection between a moving transceiver and a base station transceiver; determine the location of the transceiver; determine if there is previously received information related to the channel state from the same location; store the received information related to the channel state; and control transmission of the base station transceiver to the moving transceiver by utilizing the previously received information related to the channel state.

According to an aspect of the present invention, there is provided a method, comprising: receive information related to the channel state of a connection between a moving transceiver and a base station transceiver; determine the location of the transceiver; determine if there is previously received information related to the channel state from the same location; store the received information related to the channel state; and control transmission of the base station transceiver to the moving transceiver by utilizing the previously received information related to the channel state.

One or more examples of implementations are set forth in more detail in the accompanying drawings and the description below. Other features will be apparent from the description and drawings, and from the claims.

### Brief description of the drawings

Embodiments of the present invention are described below, by way of example only, with reference to the accompanying drawings, in which

Figure 1 illustrates an example of an environment where mobile re-lays are used;
Figure 2 is a flowchart illustrating an embodiment of the invention;
Figure 3 illustrates a simplified example of a route served by a base station;
Figure 4 illustrates an example of an embodiment; and
Figures 5 and 6 illustrate simplified examples of apparatuses in which embodiments of the invention may be applied.

**Detailed description of some embodiments**

Embodiments are applicable to any base station, network element, server, corresponding component, and/or to any communication system or any combination of different communication systems that support required functionality.

The protocols used, the specifications of communication systems, servers and user terminals, especially in wireless communication, develop rapidly. Such development may require extra changes to an embodiment. Therefore, all words and expressions should be interpreted broadly and they are intended to illustrate, not to restrict, embodiments.

Many different radio protocols to be used in communications systems exist. Some examples of different communication systems are the universal mobile telecommunications system (UMTS) radio access network (UTRAN or E-UTRAN), long term evolution (LTE, known also as E-UTRA), long term evolution advanced (LTE-A), Wireless Local Area Network (WLAN) based on IEEE 802.11stardard, worldwide interoperability for microwave access (WiMAX), Bluetooth®, personal communications services (PCS) and systems using ultra-wideband (UWB) technology. IEEE refers to the Institute of Electrical and Electronics Engineers.

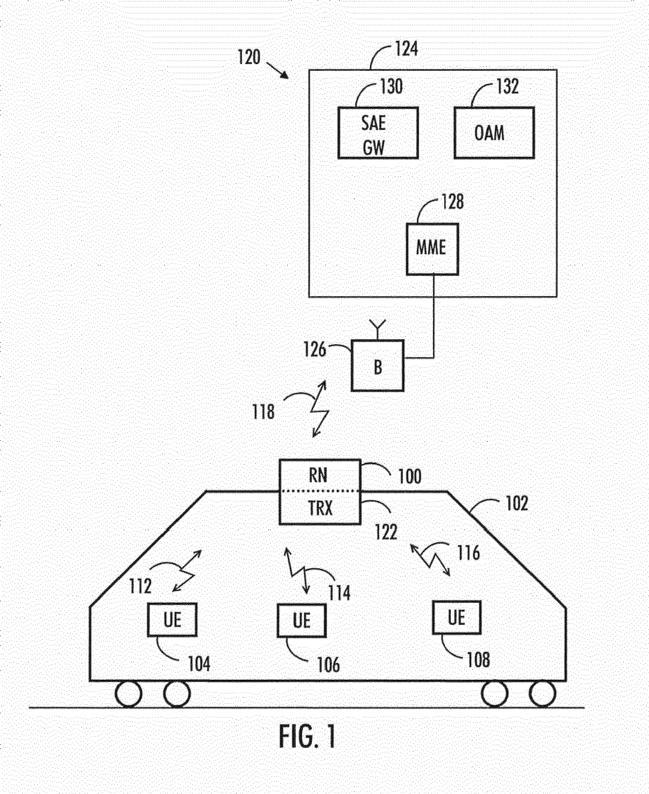

Figure 1 illustrates an example of an environment where mobile relays are used between user terminals and a telecommunication system. In the illustrated scenario, a mobile relay or a relay base station 100 is installed in a mobile vehicle 102 and configured to relay communication links between fixed network infrastructure 120 and user terminals. The mobile vehicle may be a high speed train.

Figure 1 is a simplified system architecture only showing some elements and functional entities, all being logical units whose implementation may differ from what is shown. The connections shown in Figure 1 are logical connections; the actual physical connections may be different. It is apparent to a person skilled in the art that the systems also comprise other functions and structures.

The example of Figure 1 shows a relay node 100 installed in a mobile vehicle 102. The mobile relay 100 is configured to provide network access to user terminals 104, 106 and 108 in the moving vehicle. Thus, it serves a moving cell. The user terminals are connected 112, 114 and 116 to the mobile relay 100. The relay node 100 is connected 118 to a communication network 120 of a cellular system by means of a mobile wireless backhaul connection.

A user terminal refers to a portable computing device. Such computing devices include wireless mobile communication devices operating with or without a subscriber identification module (SIM), including, but not limited to, the following types of devices: mobile phone, smartphone, personal digital assistant (PDA), handset, laptop computer.

In an embodiment, the mobile relay 100 may comprise a transceiver 122 providing a cellular wireless access for the terminals in the coverage area of the mobile relay. The access technology may be LTE or LTE-A, for example. The mobile relay 100 may have the full functionality of e.g. LTE-A eNode B towards the user equipment 104, 106, 108 but it is attached to the network side using a mobile wireless backhaul.

In an embodiment, the transceiver 122 may provide an out-band wireless access for the terminals in the coverage area of the relay node. The out-band wireless access may also be called non-cellular radio access as the frequency band utilised by the out-band wireless access is different compared to cellular services. A non-limiting example of a non-cellular or out-band access type is Wireless Local Area Network (WLAN) or WiFi.

In Figure 1, the simplified system architecture of the network 120 shows only some elements and functional entities, all being logical units whose implementation may differ from what is shown. The connections shown are logical connections; the actual physical connections may be different. It is apparent to a person skilled in the art that the systems also comprise other functions and structures. It should be appreciated that the functions, structures, elements, and protocols used in or for group communication are irrelevant to the actual invention. Therefore, they need not be discussed in more detail here.

The network example of Figure 1 comprises a core network 124. The network comprises LTE or LTE-A based access network comprising an eNodeB 126 connected to a MME (Mobility Management Entity) 128 of the core network 124.

In this simplified example, the core network 124 comprises following elements: an MME (Mobility Management Entity) 128, an SAE GW (SAE Gateway) 130, and an OAM (Operations, Administration and Management system) 132. It should be appreciated that a communication system may also comprise other core network elements besides the illustrated such as a Gateway Mobile Service Switching Centre, GMSC, a Serving GPRS Support Node, SGSN, for example. Furthermore, not all systems necessarily comprise all the above illustrated elements.

Base stations that may also be called eNodeBs (Enhanced node Bs) of a communication system may host the functions for Radio Resource Management: Radio Bearer Control, Radio Admission Control, Connection Mobility Control, Dynamic Resource Allocation (scheduling). This applies to LTE or LTE-A based systems. The MME 128 is responsible for distributing paging messages to the eNodeBs. The SAE GW 130 is an entity configured to act as a gateway between the network and other parts of communication network such as the Internet for example. The SAE GW may be a combination of two gateways, a serving gateway (S-GW) and a packet data network gateway (P-GW).

In many wireless communication systems, the network side may control the transmissions of user terminals. There may be different modulation and coding methods available for different channel conditions. In practice, to select a suitable modulation and coding scheme in order to obtain appropriate data rate for transmission, the network, in many cases the base station the user terminal is connected to, requires prior knowledge about the radio link channel conditions and also for the purpose of channel dependent scheduling. In Frequency Division Duplex FDD mode, a measured estimate of the channel condition is acquired by the mobile transceiver and reported to the base station assuming the conditions will be similar in the near future when the report will be available for the base station to use. But with rapid time variation in the channel due to high speed, link adaptation and channel dependent scheduling will be less efficient as a result of outdated measured report caused by a delay between the point in time when the mobile transceiver measured the channel conditions and the application of the measured report at the base station. This measured report is known as Channel State Information CSI.

Hence in the high speed train scenario as in Figure 1, for on-board mobile users to achieve high data rate, accurate CSI over the backhaul link at the eNodeB is required to aid link adaptation, rank selection and mobile relay node scheduling. The accuracy of the CSI which may consist of the channel quality indicator CQI, rank indicator RI and/or precoder matrix indicator PMI depends on the feedback delay relative to the channel decorrelation time which is affected by the speed of the moving train.

For example, in the LTE FDD mode, each user terminal in a network topology has typically to measure the state of its channel link and feedback the CSI to the base station, because the instantaneous channel condition of the uplink and downlink are different and some knowledge of the channel is required at the network side to maximize the spectral efficiency. In many mobile scenarios the upper bound of the achievable data rate is mainly defined by the feedback delay. The impact of feedback channel delay on LTE systems has also been investigated and a significant impact in high mobility scenarios has been detected. Hence minimizing the feedback delay in high mobility scenarios is an important challenge to address in designing wireless systems.

In an embodiment, the properties of a high speed train environment are exploited and a novel method of solving the problem of delayed feedback in high mobility scenario is provided. This method combines the use of the instantaneous CSI feedback and previous CSIs which have been stored from previous trip on the same route in a database at a network apparatus. The database may be updated frequently as the number of times the train passes through the route. The proposed solution is applicable in any environment and mobile traffic system where the mobile vehicles of the system use fixed routes. The high speed train environment is used herein as a non-limiting example of a traffic system.

The proposed method will significantly reduce the time for which the CSI is made available at the network which will result in a better overall throughput performance of the backhaul link, i.e., the link between the eNodeB and the mobile relay node installed on a moving vehicle such as a train. Embodiments of the invention take advantage of the known vehicle route and the predetermined speed of the vehicle which gives a prior knowledge of the channel condition to a certain degree. Hence link adaptation can be achieved without waiting for the delayed CSI feedback from the mobile relay nodes.

Embodiments of the invention can be integrated into the existing cellular networks operating in the FDD mode and can also be extended to the Time Division Duplex TDD mode.

Let us study an embodiment. We may here assume that an in-band mobile relay node is located at one or more carriages of a high speed train with interior and exterior antennas. The mobile relay nodes may utilize the same frequency band on both the access link (MRN to on-board users) and backhaul link (base station to MRN). The frequency band may be different as well. Each onboard user's throughput is defined as the minimum of the throughput achieved on the backhaul and access links. The antennas are deployed at fixed locations on the high speed train. Therefore the indoor performance of the communication is stable. In the relatively small cells created by the relay nodes in each carriage the channel condition on the access links are generally good to support very high rate communication.

On the other hand, the backhaul links experience fast fading with high velocity and rapidly changing environment along the rail track with fixed exterior antennas on the train. However these rapidly changing environments are deterministic. For instance a train moving from location A to location B might pass through several types of environment such as hilly terrains, tunnels etc. Hence the high speed train passes through different types of wireless channels which should be treated differently in order to maximize the wireless communication capacity. If at another time instance, a second train moves from location A to location B, the environment changes experienced by the second train will be the same experienced by the first train and the duration for which the train moves between environments will also be the same if the two trains are moving at the same speed at different instances (which is most often the case).

It has been shown that for the most part of a high speed train journey, the wireless channels experienced is rural/suburban (where most parts are wide plains and viaducts) and measurements have shown that the ratio of the energy in the specular line of sight (LOS) component to the energy in the scattered paths is relatively large and the delay of multi-paths is relatively small. Hence for such environment, large scale parameters are the main factors in determining the channel properties. The effect of the velocity of the train on the channel is a Doppler shift, while Doppler spread is not significant because of the few multi-path components. This Doppler shift can easily be compensated for, with prior knowledge of the velocity and position of the train.

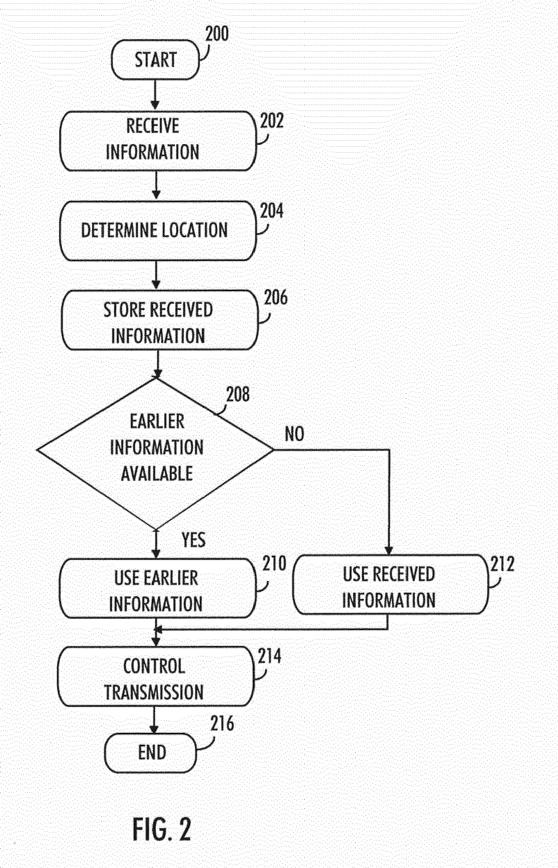

Figure 2 is a flowchart illustrating an embodiment of the invention. The flowchart illustrates the operation of a network apparatus, such as an eNodeB. The embodiment starts at step 200.

In step 202, the apparatus is configured to receive information related to the channel state of a connection between a moving transceiver and a base station transceiver. In an embodiment, a mobile relay node on-board a moving train is transmitting Channel State information CSI to the base station or eNodeB.

In step 204, the apparatus is configured to determine the location of the moving transceiver. Information on the location may be received from the transceiver or it may be determined on the basis of the CSI transmission time and the velocity of the transceiver.

In step 206, the apparatus is configured to store the received information related to the channel state. In an embodiment, the apparatus may store successive received CSI values in a database. The location of the transceiver may be associated with the CSI and stored in the database as well.

In step 208, the apparatus is configured to determine if there is previously received information related to the channel state from the same location. When a CSI value is received, the apparatus may check if the database comprises a CSI value received earlier.

If there exists a previously received value, the apparatus is in step 210 configured to utilise the previously received value.

If there previously received value does not exist, the apparatus is in step 212 configured to utilise the received value.

In step 214, the apparatus is configured to control transmission of the base station transceiver to the moving transceiver by utilizing the information related to the channel state. If previously received value exists, it is utilised at this phase.

The example ends in step 216.

Thus, the present invention takes an approach to handling delayed feedback where the channel properties of the route of moving transceivers such as mobile relay nodes of a high speed railway and the prior knowledge of the route and speed of the transceiver are utilised. Instead of trying to reduce the reporting delay proposed in prior art methods, the duration between the time the CSI is measured at the receiver (relay node) and the time the CSI is made available for use in scheduling at the eNodeB is taken into account.

For example, trains will always follow the same route and all other object such as hills, lakes, trees within the geographical surrounding of the track may be assumed to be fixed over a long period. Hence path loss and shadowing from obstacles are expected to be the same for several trips along the known route. Also the velocity at which the train approaches a particular section of the track is expected to be known and may be assumed to be the same for every trip. Therefore variation in signal amplitude experienced in a trip will be similar to variations in signal amplitude experienced in the next trip, with similar multipath propagation. Thus, a CSI value received during a previous trip can be applied to predefined positions of the next train along the route.

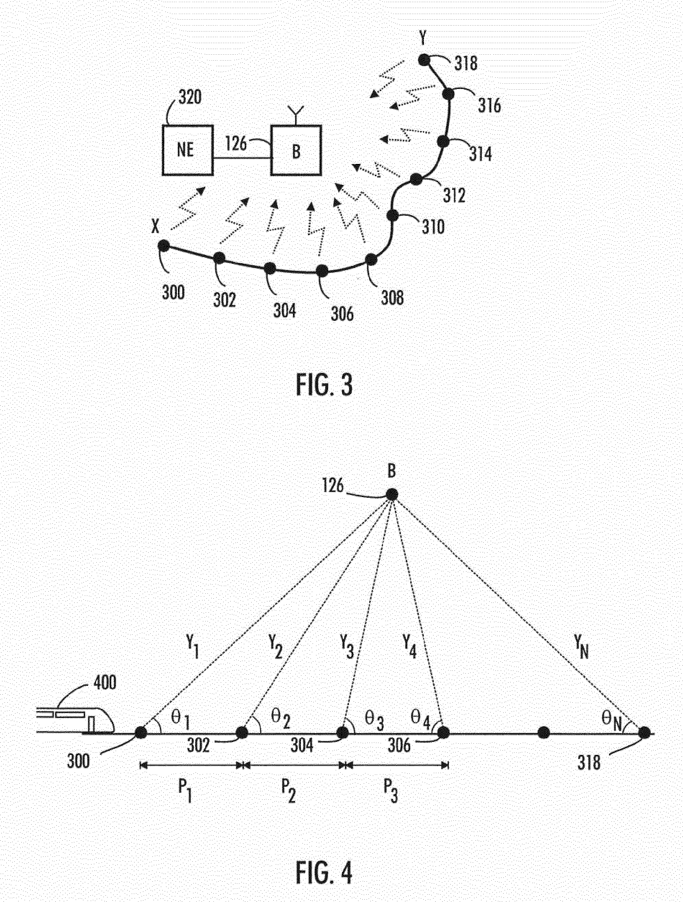

Figure 3 illustrates a simplified example of a route served by a base station 126. The route is from a location X to a location Y and a high speed train runs the route at given time intervals. The mobile relay nodes serving the carriages of the trains may be configured to report CSI values to the base station 126 at given time intervals. As the trains move at predetermined velocity on the route, the measurements occur at same geographical locations 300 to 318 each time a train is traveling on the route.

In an embodiment, the base station 126 or a network element 320 connected to the base station is configured to maintain a database where the CSI values transmitted by the mobile relay nodes at different points on the track are stored. The CSI or feedback information from the mobile relay nodes is usually available at the base stations only after some time delay. This time delay may be calculated and used alongside with the velocity of the train to obtain the precise location along the track for which the CSI value should have been used in the first trip and stored in a database for the next trip. The position along the track and the corresponding CSI values may be stored up in the database at the base station or a network element, and it may be used for the next train trip. A location based service (LBS) can be employed to maintain knowledge of the exact location of the train at any point in time. Examples of LBS are satellite positioning systems such as Global Positioning System GPS or Glonass.

Table 1

| Track position | 300 | 302 | 304 | 306 | 308 | ... | 318 |
|---|---|---|---|---|---|---|---|
| CSI trip1 | $CSI_1$ | $CSI_2$ | $CSI_3$ | $CSI_4$ | $CSI_5$ | | $CSI_M$ |
| CSI trip 2 | $CSI_1$ | $CSI_2$ | $CSI_3$ | $CSI_4$ | $CSI_5$ | | $CSI_M$ |
| CSI trip 3 | $CSI_1$ | $CSI_2$ | $CSI_3$ | $CSI_4$ | $CSI_5$ | | $CSI_M$ |
| ... | | | | | | | |
| CSI trip N | $CSI_1$ | $CSI_2$ | $CSI_3$ | $CSI_4$ | $CSI_5$ | | $CSI_M$ |

Table 1 illustrates a database and the usage of the database. In this example the database comprises the CSI values $CSI_i$ reported by a mobile relay node at given track positions 300 to 318. At different rows are measurements received during different successive train runs. In practice, the database may comprise also other information which is omitted in this example.

In an embodiment, when the first trains runs the mobile relay nodes report the CSI values which are stored in the database on the first row "CSI trip 1". As no earlier values are available, these CSI values are used in controlling the downlink transmissions. When the next train runs on the same track, the mobile relay nodes are configured report again the CSI values which are stored in the database on the second row "CSI trip 2". However, the base station detects that the CSI data from the first run is available in the database. The base station is configured utilise the CSI data from the first run in controlling the downlink transmissions. Thus, when the second train is at the location 300, the measurement value $CSI_1$ from the first run is utilized. As the speed of the train and the surroundings of the train are similar the CSI value of the first run provides a good estimation for controlling the downlink transmission. The CSI values corresponding to different locations along the rail for the first trip may be applied for the next trip without waiting for the CSI feedback from the mobile relay nodes in the present trip, thereby avoiding the problem of delayed feedback as a result of high mobility.

At the same time the base station 126 keeps receiving the CSI feedback for the present and following trips. In an embodiment, the CSI values of the previous trip are utilized for controlling the base station transmissions of the current trip. In an embodiment, a comparison parameter is obtained by comparing the received CSI value to previously received values. If the obtained comparison parameter deviates from a given threshold, the database is cleared for a fresh start. This is to avoid using outdated CSI values which can be as a result of changes in the environment such as weather conditions over a long term period. The comparison parameter may be variance, for example and the given threshold may be determined on the basis of the type of environment the high speed trains are experiencing, for example. Hence there is a continuous learning process regarding the database values.

In an embodiment, the base station is configured to determine the time of day. The time of day may reflect peculiar activities that can cause significant changes to the channel. The base station may be configured to utilize different databases for different times of day or group the database storing the CSI values based on the time of the day.

In an embodiment, the base station is configured to determine the configuration of the moving transmitter and select the database to use on the basis of the configuration. The configuration changes may comprise changes in antennas, transmitter capabilities, number of transceivers, etc.

In an embodiment, the base station may be configured to determine changes environmental factors such as weather conditions or man made changes to the environment such as the creation of a new construction site, clearing of a forest, etc. Such activities can change the propagation channel. Also in this kind of situations a database selection may occur.

In an embodiment, the number of successive trips stored in the database may be limited to a given number. When the CSI values of the maximum number of trips have been stored, the base station or network element maintaining the database may be configured to determine the average values of the stored values. The average values are stored and the rest of the database is emptied. The maximum number of trips may be determined by the size of the database, the type of environment and the season of the year, for example.

It may be assumed that Doppler frequency shift correction and pre-Doppler frequency shift correction schemes can easily be implemented, since knowledge of the velocity of the train is known in advance.

In an embodiment, the CSI transmitted by the mobile relay nodes comprises the CQI, RI and PMI. The channel quality index CQI is an indicator informing the base station which modulation and coding scheme MCS and transport block size will be appropriate to use on the present channel condition on the downlink. For example in LTE, there are 15 different CQI values with index ranging from 1 to 15 corresponding to different modulation and coding schemes and transport block sizes. In an embodiment, the CQI measurements are based but not limited to these factors Signal to Noise Ratio SNR, Signal to Interference plus Noise Ratio SINR and Signal to Noise plus Distortion Ratio SNDR.

Figure 4 illustrates an example of an embodiment. At the initiation of the first trip of the train 400, the mobile relay nodes which are equipped with location based service functionality may measure the distance to the base station (eNodeB) at the point in time the CQI values are obtained and reported back to the base station. These CQI values which are identified as indices from 1 to 15 are mapped to the corresponding distance $Y_i$ between the mobile relay node and the base station at the point i of the CQI measurement. With the prior knowledge of the CQI interval and the velocity of the train, it is possible to obtain the distance $P_i$ moved by the train before the next CQI measurement. This distance $P_i$ may then be used to derive the range for which a particular CQI value can be used.

From Figure 4, using the shortest distance between the base station to the rail track as reference point, we can obtain

$$P_i = |Y_i \cos(\theta_i) - Y_{i+1} \cos(\theta_{i+1})|$$

A database such as illustrated in Table 2 may be compiled. The base station may select from the database the CQI to be used for the next trip based on distance $Y_i$. The base station may also determine the time required to use the next CQI value for next transmission based on the velocity of the train and the distance $P_i$.

Table 2

| CQI position index | CQI index | $Y_i$ | $P_i$ |
|---|---|---|---|
| 1 | select :1→15 | $Y_1$ | $P_1$ |
| 2 | select :1→15 | $Y_2$ | $P_2$ |
| . | . | . | . |
| . | . | . | . |
| . | . | . | . |
| N | select :1→15 | $Y_N$ | $P_N$ |

In an embodiment, if the next trip is on another track parallel to the first trip track, the difference in distance between the two parallel tracks can be accounted for in the channel information.

If the CQI reporting configuration is the periodic in which the CQI is transmitted periodically with a certain interval specified by the higher layer signaling and wideband CQI reporting is enabled resulting from the high mobility instances, then the exact subframes in each frame at which the CQI is being transmitted may be determined using

$$\left( 10 \times n_{fr} + \left\lfloor \frac{n_{sl}}{2} \right\rfloor - N_{OFF,CQI} \right) mod \ N_P = 0$$

where $n_{fr}$ is the frame number, $n_{sl} = 0, 1, 2, ... 19$ is the slot index within the frame, $N_{OFF,CQI}$ is the corresponding wideband CQI reporting offset and $N_P$ is the wideband CQI reporting period. Based on the values of $N_{OFF,CQI}$ and $N_P$ which can be obtained from LTE standards, the exact subframes may be obtained. Knowledge of these subframes ensures synchronization of the reporting configuration of the first trip with the next trip.

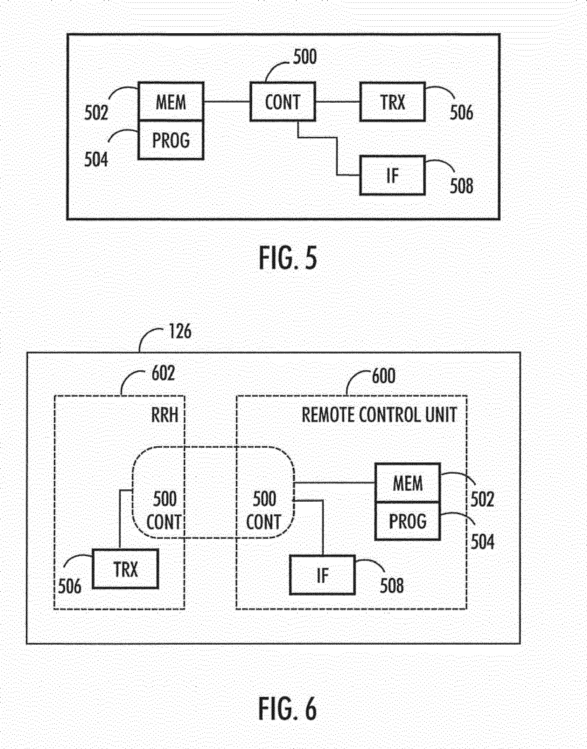

Figure 5 illustrates an embodiment. The figure illustrates a simplified example of an apparatus in which embodiments of the invention may be applied. In some embodiments, the apparatus may be a base station or eNodeB 126 or a part of an eNodeB. In some embodiments, the apparatus may be a network element 320 connected to an eNodeB.

It should be understood that the apparatus is depicted herein as an example illustrating some embodiments. It is apparent to a person skilled in the art that the apparatus may also comprise other functions and/or structures and not all described functions and structures are required. Although the apparatus has been depicted as one entity, different modules and memory may be implemented in one or more physical or logical entities.

The apparatus of the example includes a control circuitry 500 configured to control at least part of the operation of the apparatus.

The apparatus may comprise a memory 502 for storing data. Furthermore the memory may store software 504 executable by the control circuitry 500. The memory may be integrated in the control circuitry.

If the apparatus is an eNodeB or a base station, the apparatus comprises a transceiver 506. The transceiver is operationally connected to the control circuitry 500. It may be connected to an antenna arrangement comprising one more antenna elements or antennas (not shown).

The software 504 may comprise a computer program comprising program code means adapted to cause the control circuitry 500 of the apparatus to control the transceiver 506.

The control circuitry 500 is configured to execute one or more applications. The applications may be stored in the memory 502.

The apparatus may comprise an interface 510 operationally connected to the control circuitry 500. The interface may connect the apparatus to other network elements.

In an embodiment, the applications executable by the control circuitry 500 may cause the apparatus to receive information related to the channel state of a connection between a moving transceiver and a base station transceiver; determine the location of the transceiver; determine if there is previously received information related to the channel state from the same location; store the received information related to the channel state; and control transmission of the base station transceiver to the moving transceiver by utilizing the previously received information related to the channel state.

In an embodiment, as shown in Figure 6, at least some of the functionalities of the apparatus 126 may be shared between two physically separate devices, forming one operational entity. Therefore, the apparatus 126 may be seen to depict the operational entity comprising one or more physically separate devices for executing at least some of the described processes. Thus, the apparatus 126 of Figure 6, utilizing such shared architecture, may comprise a remote control unit RCU 600, such as a host computer or a server computer, operatively coupled (e.g. via a wireless or wired network) to a remote radio head RRH 602 located in the base station. In an embodiment, at least some of the described processes may be performed by the RCU 600. In an embodiment, the execution of at least some of the described processes may be shared among the RRH 602 and the RCU 600.

In an embodiment, the RCU 600 may generate a virtual network through which the RCU 600 communicates with the RRH 602. In general, virtual networking may involve a process of combining hardware and software network resources and network functionality into a single, software-based administrative entity, a virtual network. Network virtualization may involve platform virtualization, often combined with resource virtualization. Network virtualization may be categorized as external virtual networking which combines many networks, or parts of networks, into the server computer or the host computer (i.e. to the RCU). External network virtualization is targeted to optimized network sharing. Another category is internal virtual networking which provides network-like functionality to the software containers on a single system. Virtual networking may also be used for testing the terminal device.

In an embodiment, the virtual network may provide flexible distribution of operations between the RRH and the RCU. In practice, any digital signal processing task may be performed in either the RRH or the RCU and the boundary where the responsibility is shifted between the RRH and the RCU may be selected according to implementation.

The steps and related functions described in the above and attached figures are in no absolute chronological order, and some of the steps may be performed simultaneously or in an order differing from the given one. Other functions can also be executed between the steps or within the steps. Some of the steps can also be left out or replaced with a corresponding step.

The apparatuses or controllers able to perform the above-described features may be implemented as an electronic digital computer, or a circuitry which may comprise a working memory (RAM), a central processing unit (CPU), and a system clock. The CPU may comprise a set of registers, an arithmetic logic unit, and a controller. The controller or the circuitry is controlled by a sequence of program instructions transferred to the CPU from the RAM. The controller may contain a number of microinstructions for basic operations. The implementation of microinstructions may vary depending on the CPU design. The program instructions may be coded by a programming language, which may be a high-level programming language, such as C, Java, etc., or a low-level programming language, such as a machine language, or an assembler. The electronic digital computer may also have an operating system, which may provide system services to a computer program written with the program instructions.

As used in this application, the term 'circuitry' refers to all of the following: (a) hardware-only circuit implementations, such as implementations in only analog and/or digital circuitry, and (b) combinations of circuits and software (and/or firmware), such as (as applicable): (i) a combination of processor(s) or (ii) portions of processor(s)/software including digital signal processor(s), software, and memory(ies) that work together to cause an apparatus to perform various functions, and (c) circuits, such as a microprocessor(s) or a portion of a microprocessor(s), that require software or firmware for operation, even if the software or firmware is not physically present.

This definition of 'circuitry' applies to all uses of this term in this application. As a further example, as used in this application, the term 'circuitry' would also cover an implementation of merely a processor (or multiple processors) or a portion of a processor and its (or their) accompanying software and/or firmware. The term 'circuitry' would also cover, for example and if applicable to the particular element, a baseband integrated circuit or applications processor integrated circuit for a mobile phone or a similar integrated circuit in a server, a cellular network device, or another network device.

An embodiment provides a computer program embodied on a distribution medium, comprising program instructions which, when loaded into an electronic apparatus, are configured to control the apparatus to execute the embodiments described above.

The computer program may be in source code form, object code form, or in some intermediate form, and it may be stored in some sort of carrier, which may be any entity or device capable of carrying the program. Such carriers include a record medium, computer memory, read-only memory, and a software distribution package, for example. Depending on the processing power needed, the computer program may be executed in a single electronic digital computer or it may be distributed amongst a number of computers.

The apparatus may also be implemented as one or more integrated circuits, such as application-specific integrated circuits ASIC. Other hardware embodiments are also feasible, such as a circuit built of separate logic components. A hybrid of these different implementations is also feasible. When selecting the method of implementation, a person skilled in the art will consider the requirements set for the size and power consumption of the apparatus, the necessary processing capacity, production costs, and production volumes, for example.

The apparatuses or controllers able to perform the above-described features may comprise means for receiving information related to the channel state of a connection between a moving transceiver and a base station transceiver; means for determining the location of the transceiver; means for determining if there is previously received information related to the channel state from the same location; means for storing the received information related to the channel state; and means for controlling transmission of the base station transceiver to the moving transceiver by utilizing the previously received information related to the channel state.

It will be obvious to a person skilled in the art that, as the technology advances, the inventive concept can be implemented in various ways. The invention and its embodiments are not limited to the examples described above but may vary within the scope of the claims.

**Claims**

1.   An apparatus, comprising:

     at least one processor; and
     at least one memory including computer program code,
     the at least one memory and the computer program code configured to, with the at least one processor, cause the apparatus at least to perform:

          receive information related to the channel state of a connection between a moving transceiver and a base station transceiver;
          determine the location of the transceiver;
          determine if there is previously received information related to the channel state from the same location;
          store the received information related to the channel state; and
          control transmission of the base station transceiver to the moving transceiver by utilizing the previously received information related to the channel state.

2.   The apparatus of claim 1, the at least one memory and the computer program code configured to, with the at least one processor, cause the apparatus further to:

          associate received information related to the channel state with the location of the transceiver.

3.   The apparatus of claim 1 or 2, the at least one memory and the computer program code configured to, with the at least one processor, cause the apparatus further to:

          compare the received information related to the channel state with the previously received information related to the channel state from the same location; and if the difference between the received and previously received information is larger than a predetermined threshold value, delete or modify the previously received information.

4.   The apparatus of any preceding claim, wherein the information related to the channel state is stored in a database, the at least one memory and the computer program code configured to, with the at least one processor, cause the apparatus further to:

          determine when a predetermined amount of information has been stored into the database;
          calculate a function of the stored values;
          discard or modify the information stored in the database; and
          store the calculated function in the database.

5.   The apparatus of claim 4, configured to determine the time of day and select the database to use on the basis of the time of day.

6.   The apparatus of claim 4, configured to determine the configuration of the moving transmitter and select the database to use on the basis of the configuration.

7.   The apparatus of any preceding claim, wherein the information related to the channel state of a connection comprises at least one of the following: channel quality indicator, rank indicator and precoder matrix indicator.

8. The apparatus of any preceding claim, the at least one memory and the computer program code configured to, with the at least one processor, cause the apparatus further to:

control transmission of the base station transceiver to the moving transceiver by selecting modulation and coding scheme for the transmission.

9. The apparatus of claim 8, the at least one memory and the computer program code configured to, with the at least one processor, cause the apparatus further to:

obtain information on the velocity of the transceiver, and
determine the time interval the selected modulation and coding scheme are to be used.

10. The apparatus of any preceding claim, wherein the apparatus in an eNodeB.

11. A method, comprising:

receive information related to the channel state of a connection between a moving transceiver and a base station transceiver;
determine the location of the transceiver;
determine if there is previously received information related to the channel state from the same location;
store the received information related to the channel state; and
control transmission of the base station transceiver to the moving transceiver by utilizing the previously received information related to the channel state.

12. The method of claim 11, further comprising:

associate received information related to the channel state with the location of the transceiver.

13. The method of claim 11 or 12, further comprising:

compare the received information related to the channel state with the previously received information related to the channel state from the same location; and if the difference between the received and previously received information is larger than a predetermined threshold value, delete or modify the previously received information.

14. The method of any preceding claim 11 to 13, further comprising:

store the information related to the channel state in a database;
determine when a predetermined amount of information has been stored into the database;
calculate a function of the stored values;
discard or modify the information stored in the database; and
store the calculated function in the database.

15. The method of claim 14, further comprising: determine the time of day and select the database to use on the basis of the time of day.

16. The method of claim 14, further comprising: determine the configuration of the moving transmitter and select the database to use on the basis of the configuration.

17. The method of any preceding claim 11 to 16, wherein the information related to the channel state of a connection comprises at least one of the following:

channel quality indicator, rank indicator and precoder matrix indicator.

18. The method of any preceding claim 11 to 17, further comprising:

control transmission of the base station transceiver to the moving transceiver by selecting modulation and coding scheme for the transmission.

**19.** The method of claim 18, further comprising:

> obtain information on the velocity of the transceiver, and
> determine the time interval the selected modulation and coding scheme are to be used.

**20.** A computer program product embodied on a distribution medium readable by a computer and comprising program instructions which, when loaded into an apparatus, execute a computer process comprising the steps of any preceding claim 11 to 19.

FIG. 1

FIG. 2

FIG. 3

FIG. 4

FIG. 5

FIG. 6

Europäisches
Patentamt

European
Patent Office

Office européen
des brevets

# EUROPEAN SEARCH REPORT

Application Number

EP 14 18 7934

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 755 440 A1 (SWISSCOM AG [CH]) 16 July 2014 (2014-07-16) | 1,11 | INV. H04B7/155 |
| Y | * paragraph [0018] - paragraph [0045]; claims 1-16; figures 1-5 * | 1-20 | |
| Y | US 6 487 393 B1 (DAVENPORT DAVID M [US] ET AL) 26 November 2002 (2002-11-26) * column 1 - column 3; figure 1 * | 1-20 | |
| Y | US 2003/091017 A1 (DAVENPORT DAVID M [US] ET AL) 15 May 2003 (2003-05-15) * column 1 - column 3; figure 1 * | 1-20 | |

TECHNICAL FIELDS
SEARCHED (IPC)

H04B

The present search report has been drawn up for all claims

| Place of search | Date of completion of the search | Examiner |
|---|---|---|
| Munich | 8 April 2015 | Bohnhoff, Peter |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 14 18 7934

This annex lists the patent family members relating to the patent documents cited in the above-mentioned European search report.
The members are as contained in the European Patent Office EDP file on
The European Patent Office is in no way liable for these particulars which are merely given for the purpose of information.

08-04-2015

| Patent document cited in search report | | Publication date | Patent family member(s) | | Publication date |
|---|---|---|---|---|---|
| EP 2755440 | A1 | 16-07-2014 | EP<br>US | 2755440 A1<br>2014198715 A1 | 16-07-2014<br>17-07-2014 |
| US 6487393 | B1 | 26-11-2002 | NONE | | |
| US 2003091017 | A1 | 15-05-2003 | NONE | | |

EPO FORM P0459

For more details about this annex : see Official Journal of the European Patent Office, No. 12/82